# EUROPEAN PATENT APPLICATION

(11) **EP 4 307 812 A1**
(43) Date of publication of application: **17.01.2024**
(21) Application number: 21930239.5
(22) Date of filing: 12.03.2021
(51) Int. Cl.: H04W 72/12, H04W 4/06, H04W 28/04

(54) **TERMINAL AND WIRELESS COMMUNICATION METHOD**

(71) Applicant: NTT DOCOMO, INC., Tokyo 100-6150 (JP)
(72) Inventor: YOSHIOKA, Shohei, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2021/010221
(87) International publication number: WO 2022/190389

(57) **Abstract**

A terminal receives a downlink data channel common to a group of terminals in data distribution for multiple terminals. The terminal assumes that the terminal group is divided into multiple subgroups and that semi-fixed scheduling of downlink data channels is applied as a unit of subgroups.

## Description

### [Technical Field]

This disclosure relates to a terminal and a radio communication method supporting a multicast/broadcast service.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

Release 17 of 3GPP covers simultaneous data transmission (also called broadcasting) services (tentatively called MBS) to multiple specified or unspecified terminals (User Equipment, UE) in NR (Non-Patent Literature 1).

In MBS, for example, the scheduling of UE groups to be serviced and the improvement of reliability (For example, feedback to a HARQ(Hybrid Automatic repeat request) radio base station (gNB)) are being studied.

### [Citation List]

### [Non-Patent Literature]

Non-Patent Literature 1: "New Work Item on NR support of Multicast and Broadcast Services," RP-193248, 3GPP TSG RAN Meeting #86, 3GPP, December 2019

### [Summary of Invention]

In MBS, UEs need to efficiently and reliably perform the actions associated with activating/deactivating the downlink data channel common to UE groups, specifically, the semi-persistent scheduling (SPS) of the Physical Downlink Shared Channel (PDSCH).

Confirmation for activation/deactivation of the scheduling must also be ensured.

Therefore, the following disclosure has been made in view of these circumstances, and the purpose is to provide a terminal and a radio communication method that can efficiently and reliably perform operations associated with semi-fixed scheduling in a simultaneous data transmission service to multiple specified or unspecified terminals.

One aspect of the disclosure is a terminal (UE200) including a reception unit (radio signal transmission and reception unit 210) that receives a downlink data channel common to a group of terminals in data distribution for multiple terminals and a control unit (control unit 270) that assumes that a group of terminals is divided into multiple subgroups and activation or deactivation of semi-fixed scheduling of the downlink data channel is applied as a unit of the subgroup.

One aspect of the disclosure is a terminal (UE200) including a reception unit (radio signal transmission and reception unit 210) that receives a downlink data channel common to a group of terminals in data distribution for multiple terminals and a control unit (control unit 270) that assumes that feedback of an automatic retransmission request in the downlink data channel is transmitted in a different time domain for each terminal.

One aspect of the disclosure is a terminal (UE200) including a reception unit (radio signal transmission and reception unit 210) that receives a downlink data channel common to a group of terminals in data distribution for multiple terminals and a control unit (control unit 270) that applies both positive and negative responses as feedback of an automatic retransmission request for activation or deactivation of semi-fixed scheduling of the downlink data channel.

One aspect of the disclosure is a terminal (UE200) including a reception unit (radio signal transmission and reception unit 210) that receives a downlink data channel common to a group of terminals in data distribution for multiple terminals and a control unit (control unit 270) that controls activation or deactivation of semi-fixed scheduling of the downlink data channel based on signaling common to the group of terminals or signaling specific to the terminals.

One aspect of the disclosure is a radio communication method including the steps of receiving a downlink data channel common to a group of terminals in data distribution for multiple terminals and assuming that that a group of terminals is divided into multiple subgroups and activation or deactivation of semi-fixed scheduling of the downlink data channel is applied as a unit of the subgroup.

One aspect of the disclosure is a radio communication method including the steps of receiving a downlink data channel common to a group of terminals in data distribution for multiple terminals and assuming that feedback of an automatic retransmission request in the downlink data channel is transmitted in a different time domain for each terminal.

### [Brief Description of Drawings]

[Fig. 1]

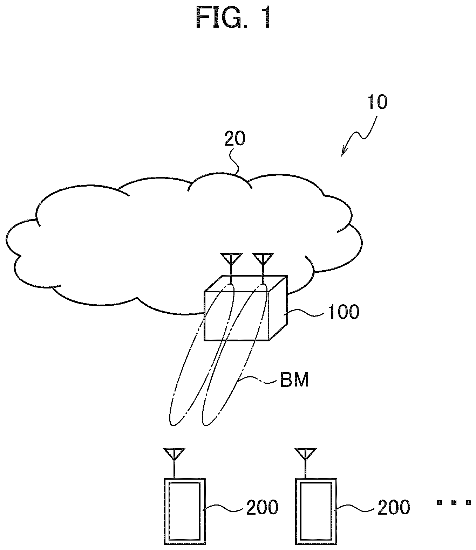

   Fig. 1 is an overall schematic diagram of a radio communication system 10.
[Fig. 2]

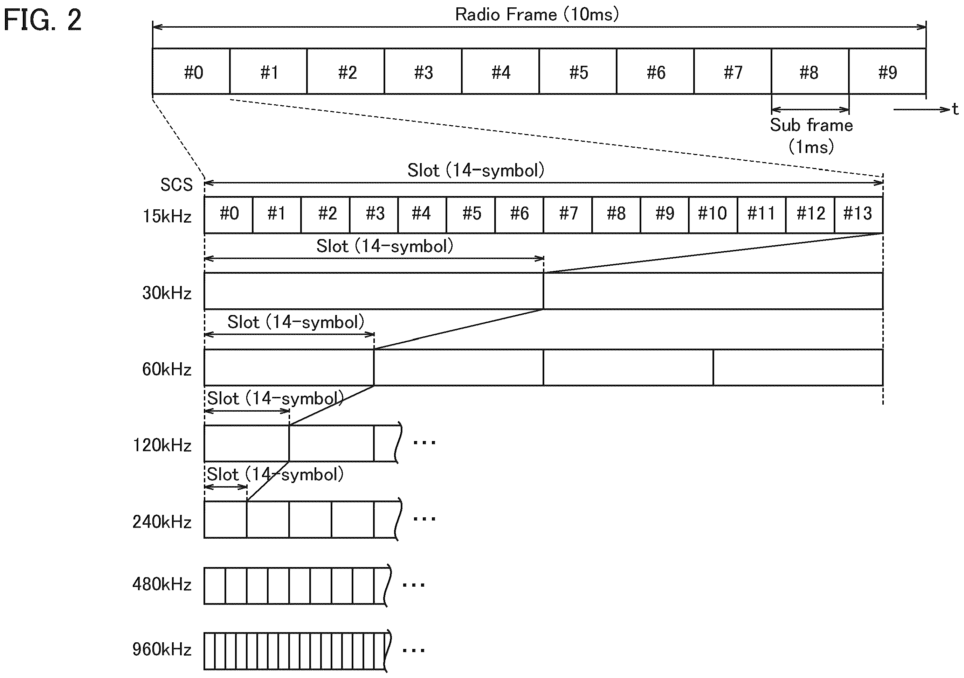

   Fig. 2 is a diagram showing an example configuration of the radio frame, subframe and slot used in radio communication system 10.
[Fig. 3]

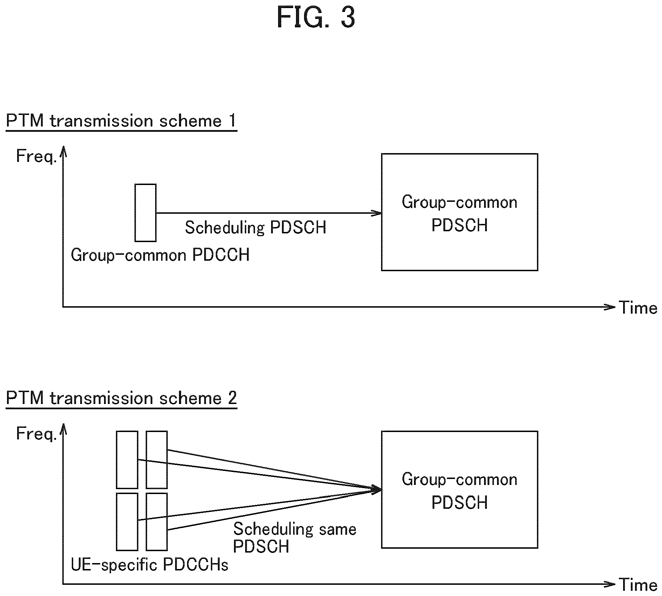

   Fig. 3 shows configuration examples of PTM transmission method 1 and PTM transmission method 2.
[Fig. 4]

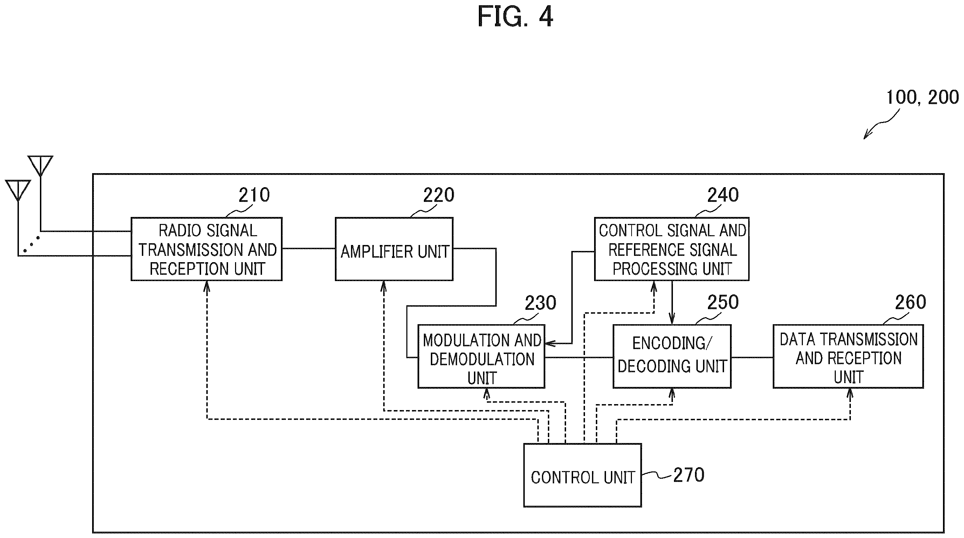

   Fig. 4 is a functional block diagram of gNB100 and UE200.
[Fig. 5]

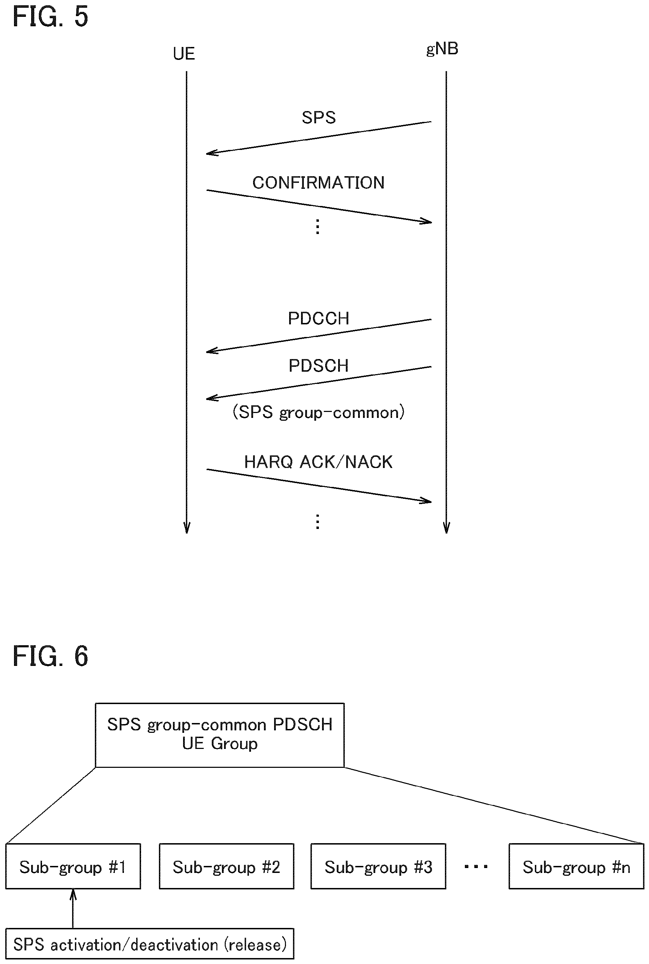

   Fig. 5 shows an example sequence of PDCCH, PDSCH and HARQ feedback that provided the scheme of SPS in MBS.
[Fig. 6]
   Fig. 6 is a diagram showing an example of the configuration of a terminal group and a subgroup in operation example 1.
[Fig. 7]

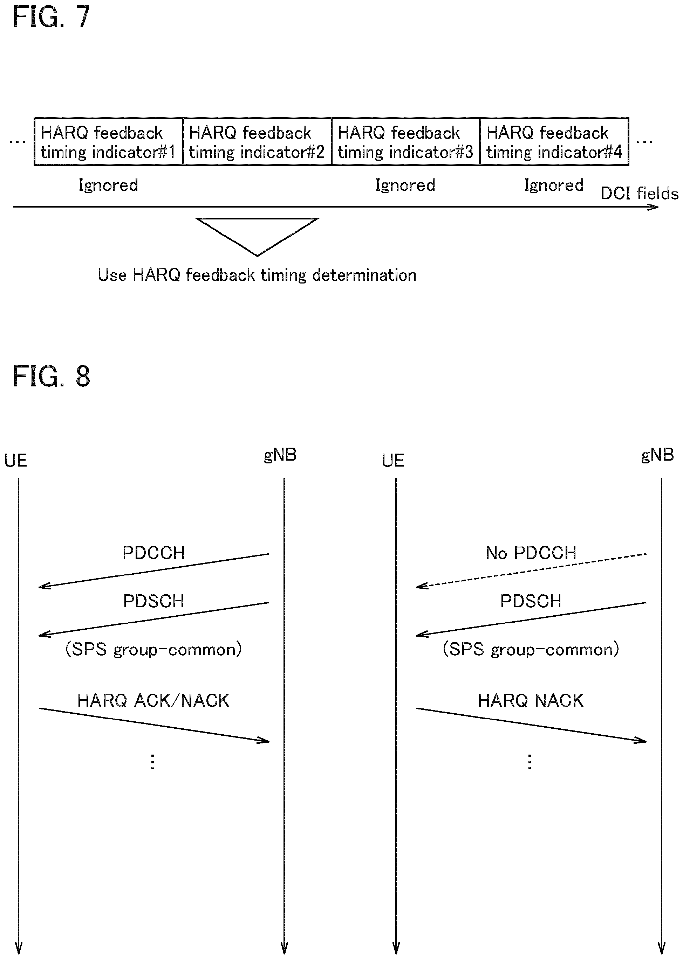

   Fig. 7 is a diagram showing an instruction example of HARQ feedback in operation example 2.
[Fig. 8]
   Fig. 8 is a diagram showing an example sequence of PDCCH, PDSCH and HARQ feedback in operation example 3.
[Fig. 9]

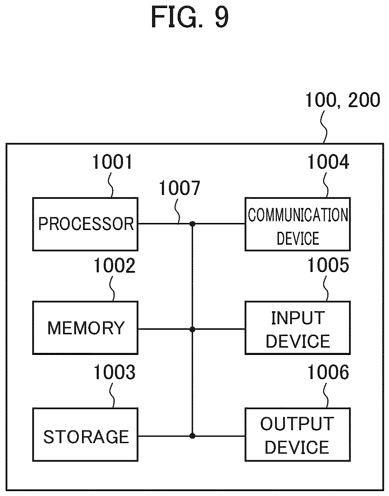

   Fig. 9 shows an example of the hardware configuration of the gNB100 and the UE200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

### (1.1) Example System Configuration

Fig. 1 is an overall schematic configuration of a radio communication system 10 according to the present embodiment. The radio communication system 10 is a radio communication system according to 5G New Radio(NR) and includes a Next Generation-Radio Access Network 20 (NG-RAN 20, and several terminals 200 (User Equipment 200, below, UE200).

The radio communication system 10 may be a radio communication system according to a scheme called Beyond 5G, 5G Evolution or 6G.

The NG-RAN20 includes a radio base station 100 (Below: gNB100). The specific configuration of the radio communication system 10 including the number of gNBs and UEs is not limited to the example shown in Fig. 1.

The NG-RAN20 actually includes multiple NG-RAN nodes, specifically, gNBs (or ng-eNBs), and is connected to a core network (5 GC, not shown) according to 5G. Note that the NG-RAN20 and 5 GCs may simply be described as a network.

The gNB100 is a radio base station in accordance with NR and performs radio communication in accordance with the UE200 and NR. By controlling radio signals transmitted from multiple antenna elements, the gNB100 and UE200 are capable of supporting Massive MIMO, which generates a more directional beam BM, carrier aggregation (CA), which uses multiple component carriers (CCs) bundled together, and dual connectivity (DC), which simultaneously communicates between the UE and each of the multiple NG-RAN nodes.

The radio communication system 10 corresponds to FR1 and FR2. The frequency bands of each FR(Frequency Range) are as follows:
- FR1:410 MHz to 7.125 GHz
- FR2:24.25 GHz to 52.6 GHz
FR1 uses sub-carrier spacing (SCS) of 15, 30 or 60 kHz and may use a bandwidth (BW) of 5~100 MHz. FR2 is a higher frequency than FR1, uses SCS of 60 or 120 kHz(240 kHz may be included) and may use a bandwidth (BW) of 50~400 MHz.

In addition, the radio communication system 10 may support a higher frequency band than that of FR2. Specifically, radio communication system 10 may support frequency bands above 52.6 GHz and up to 114.25 GHz. radio communication system 10 may also support frequency bands between FR1 and FR2.

Cyclic Prefix-Orthologous Frequency Division Multiplexing(CP-OFDM)/Discrete Fourier Transform-Spread (DFT-S-OFDM) with larger Sub-Carrier Spacing (SCS) may also be applied. Furthermore, DFT-S-OFDM may be applied to the downlink (DL) as well as the uplink (UL).

Fig. 2 shows an example configuration of the radio frame, subframe and slot used in radio communication system 10.

As shown in Fig. 2, one slot consists of 14 symbols, and the larger (wider) the SCS, the shorter the symbol period (and slot period). The number of symbols constituting one slot need not necessarily be 14 symbols (For example, 28, 56 symbols). In addition, the number of slots per subframe may vary depending on the SCS. In addition, the SCS may be wider than 240 kHz (For example, as shown in Fig. 2, 480 kHz, 960 kHz).

Note that the time direction (t) shown in Fig. 2 may be referred to as a time domain, symbol period or symbol time. The frequency direction may also be referred to as a frequency domain, resource block, resource block group, subcarrier, BWP (bandwidth part), subchannel or common frequency resource.

### (1.2) Providing MBS

In the radio communication system 10, multicast and broadcast services (MBS) may be provided.

For example, in a stadium or hall, many UE200s may be located within a certain geographic area, and many UE200s may receive the same data simultaneously. In such a case, the use of MBS rather than Unicast is effective.

Unicast may be interpreted as communication that takes place one-to-one with the network by specifying one specific UE200 (identification information specific to the UE200 may be specified).

Multicasting may be interpreted as communication that takes place one-to-many (specific many) with the network by specifying multiple specific UE200s (identification information for multicasting may be specified). It should be noted that as a result, the number of UE200s that receive data for receiving multicasting may be 1.

Broadcast may be interpreted as communication between the network and an unspecified number of UE200s. The data to be multicasted/broadcast may have identical copied content, but some content such as headers may be different. Also, while the data to be multicasted/broadcast may be transmitted (distributed) at the same time, it does not necessarily require strict concurrency and may include propagation delays and/or processing delays within RAN nodes, etc.

Note that the target UE200 may be in the radio resource control layer (RRC) state of either idle (RRC idle), connected (RRC connected) or other state (For example, an inactive state). The inactive state may be interpreted as a state in which some configurations of the RRC are maintained.

MBS envisions three methods for scheduling the multicast/broadcast Physical Downlink Shared Channel (PDSCH), specifically scheduling MBS packets (which may be read as data):. RRC connected UE may be read as RRC idle UE and RRC inactive UE.

- PTM transmission method 1: Schedule group-common PDSCH using group-common PDCCH(Physical Downlink Control Channel) for MBS group of RRC connected UE.
- PDCCH and CRC of PDSCH are scrambled by group-common RNTI(Radio Network Temporary Identifier).
- PTM transmission method 2: For the MBS group of the RRC connected UE, the group-common PDSCH is scheduled using the terminal-specific (UE-specific)PDCCH.
- The CRC of the PDCCH is scrambled by the UE-specific RNTI.
- The PDSCH is scrambled by the group-common RNTI.
- PTP transmission method: UE-specific PDSCH is scheduled for the RRC connected UE using UE-specific PDCCH.
- PDCCH and CRC of PDSCH are scrambled by UE-specific RNTI.
This may mean that MBS packets are transmitted by Unicast.

Fig. 3 shows configuration examples of PTM transmission method 1 and PTM transmission method 2. Note that the UE-specific PDCCH/PDSCH can be identified by the target UE but need not be identified by other UEs in the same MBS group. The group common PDCCH/PDSCH is transmitted in the same time/frequency resource and can be identified by all UEs in the same MBS group. In addition, the names of the PTM transmission methods 1 and 2 are tentative names and may be called by different names as long as the above operations are performed.

In point-to-point (PTP) delivery, the RAN node may deliver individual copies of the MBS data packets to individual UEs by radio. In point-to-multipoint (PTM) delivery, the RAN node may deliver a single copy of the MBS data packets to a set of UEs by radio.

In addition, in order to improve the reliability of MBS, the following two feedback methods are envisioned for HARQ(Hybrid Automatic repeat request) feedback, specifically, HARQ feedback for multicast/broadcast PDSCH.

- Option 1: Feedback both ACK and NACK (ACK/NACK feedback) - The UE that successfully receives and decrypts the PDSCH sends an ACK - The UE that fails to receive and decrypt the PDSCH sends a NACK - PUCCH(Physical Uplink Control Channel) resource configurations: PUCCH-Config can be configured for multicasting
   ▪PUCCH resources: Shared/orthogonal between UEs depends on network configurations
   ▪HARQ-ACK CB (codebook): supports type-1 and type-2(CB decision algorithm (specified in 3GPP TS 38.213)
   ▪Multiplexing: Unicast or multicast can be applied

▪Option 2: NACK-only feedback
   ▪A UE that successfully receives and decrypts a PDSCH does not send an ACK (does not send a response)
   ▪A UE that fails to receive and decrypt a PDSCH sends a NACK
   ▪For a given UE, PUCCH resource configurations can be set separately by unicasting or group casting (multicast)

Note that ACK may be referred to as positive acknowledgement and NACK as negative acknowledgement. HARQ may be referred to as automatic retransmission request.

Enabling/Disabling Option 1 or Option 2 may be either:
▪RRC and Downlink Control Information (DCI)
▪RRC only

In addition, the following content is expected regarding SPS(Semi-persistent Scheduling) of multicast/broadcast PDSCH.

▪Uses SPS group-common PDSCH
▪Multiple SPS group-common PDSCH can be configured as UE capability
▪HARQ feedback can be provided to SPS group-common PDSCH
▪At least activation/deactivation can be provided by group-common PDCCH

Note that deactivation may be replaced by other synonymous terms such as release. For example, activation may be replaced by start, start, trigger, etc., and deactivation may be further replaced by end, stop, etc.

SPS is scheduling used as a contrast to dynamic scheduling, which may be called semi-fixed, semi-persistent or semi-persistent scheduling, etc., and may be interpreted as Configured Scheduling(CS).

Scheduling may be interpreted as the process of allocating resources to transmit data. In dynamic scheduling, all PDSCH may be interpreted as a mechanism scheduled by the DCI (For example, DCI1_0, DCI1_1 or DCI1_2). SPS may be interpreted as a mechanism by which PDSCH transmission is scheduled by higher layer signaling, such as RRC messages.

Also, with respect to the physical layer, there may be scheduling categories for time-domain scheduling and frequency-domain scheduling.

In addition, multicast, group-cast, broadcast, and MBS may be read in conjunction with each other. Multicast-PDSCH, PDSCH scrambled by group-common RNTI may be read in conjunction with each other.

Furthermore, the terms data and packets may be read in conjunction with each other and may be interpreted synonymously with terms such as signals, data units, etc. In addition, transmission, reception, transmission and delivery may be read in conjunction with each other.

### (2)Function block configuration of radio communication system

Next, the functional block configuration of the radio communication system 10 will be described. Specifically, the functional block configuration of the gNB100 and the UE200 will be described.

Fig. 4 shows the functional block configuration of the gNB100 and the UE200. The UE200 will be described below. As shown in Fig. 4, the UE200 includes a radio signal transmission and reception unit 210, an amplifier unit 220, a modulation and demodulation unit 230, a control signal and reference signal processing unit 240, an encoding/decoding unit 250, a data transmission and reception unit 260 and a control unit 270.

Note that only the main functional blocks related to the description of the embodiment are shown in Fig. 4, and the UE200 has other functional blocks (For example, the power supply). Fig. 4 shows the functional block configuration of the UE200(gNB100), and see Fig. 9 for the hardware configuration.

The radio signal transmission and reception unit 210 transmits and receives radio signals in accordance with NR. The radio signal transmission and reception unit 210 supports Massive MIMO, CA for bundling multiple CCs, and DC for simultaneously communicating between UE and each of the 2 NG-RAN nodes.

The radio signal transmission and reception unit 210 also supports MBS and can receive a downlink channel that is group common in data distribution for multiple UE200s. In this embodiment, the radio signal transmission and reception unit 210 may constitute a reception unit.

The radio signal transmission and reception unit 210 can receive a downlink data channel (PDSCH) common to a group of terminals, specifically, a group-common PDSCH (which may include an SPS group-common PDSCH). The radio signal transmission and reception unit 210 can also receive a downlink control channel common to a group of terminals, specifically, a group-common PDCCH.

The amplifier unit 220 will consist of a Power Amplifier (PA), a Low Noise Amplifier (LNA) and other components. The amplifier unit 220 amplifies the signal output from the modulation and demodulation unit 230 to a predetermined power level. The amplifier unit 220 also amplifies the RF signal output from the radio signal transmission and reception unit 210.

The modulation and demodulation unit 230 performs data modulation/demodulation, transmission power setting and resource block allocation for each predetermined communication destination (such as the gNB 100). On the modulation and demodulation unit 230, Cyclic Prefix-Orthologous Frequency Division Multiplexing(CP-OFDM)/Discrete Fourier Transform-Spread (DFT-S-OFDM) may be applied. DFT-S-OFDM may be used not only for the uplink (UL) but also for the downlink (DL).

The control signal and reference signal processing unit 240 performs processing for various control signals transmitted and received by the UE200 and processing for various reference signals transmitted and received by the UE200.

Specifically, the control signal and reference signal processing unit 240 receives various control signals transmitted from the gNB100 via a predetermined control channel, such as control signals of a radio resource control layer (RRC). The control signal and reference signal processing unit 240 also transmits various control signals toward the gNB100 via a predetermined control channel.

The control signal and reference signal processing unit 240 performs processing using a reference signal (RS) such as a Demodulation Reference Signal (DMRS) and a Phase Tracking Reference Signal (PTRS).

DMRS is a known reference signal (pilot signal) between individual base stations and terminals for estimating a fading channel used for data demodulation. PTRS is a reference signal for individual terminals for estimating phase noise, which is a problem in high frequency bands.

In addition to DMRS and PTRS, the reference signal may include Channel State Information-Reference Signal(CSI-RS), Sounding Reference Signal (SRS), and Positioning Reference Signal (PRS) for location information.

The channel also includes a control channel and a data channel. The control channel may include PDCCH, PUCCH(Physical Uplink Control Channel), RACH (Downlink Control Information (DCI) including Random Access Channel, Random Access Radio Network Temporary Identifier(RA-RNTI)), and Physical Broadcast Channel (PBCH) .

The data channel may also include PDSCH, and PUSCH(Physical Uplink Shared Channel). Data may mean data transmitted through a data channel.

The encoding/decoding unit 250 performs data division/concatenation and channel coding/decoding, etc. for each predetermined communication destination (gNB100 or other gNB).

Specifically, the encoding/decoding unit 250 divides the data output from data transmission and reception unit 260 into predetermined sizes and performs channel coding on the divided data. The encoding/decoding unit 250 decodes the data output from the modulation and demodulation unit 230 and concatenates the decoded data.

The data transmission and reception unit 260 transmits and receives protocol data units (PDU) and service data units (SDU). Specifically, the data transmission and reception unit 260 performs assembly/disassembly of PDUs/SDUs in multiple layers (Media access control layer (MAC), radio link control layer (RLC), and packet data convergence protocol layer (PDCP), etc.). The data transmission and reception unit 260 also performs error correction and retransmission control of data based on a hybrid automatic repeat request (ARQ).

The control unit 270 controls each functional block that constitutes the UE200. In particular, in the present embodiment, the control unit 270 performs control over the scheduling of the downlink channel with respect to the MBS and the HARQ feedback of the channel.

The control unit 270 performs control corresponding to the scheduling of the downlink data channel that is common to a group of terminals in data distribution to the MBS, that is, to multiple UE200s. Specifically, control unit 270 can perform control corresponding to group-common PDCCH and group-common PDSCH scheduling.

With respect to the SPS group-common PDSCH, the control unit 270 may assume that a terminal group is divided into multiple subgroups and that SPS of the relevant downlink data channel (PDSCH) for the terminal group, i.e. activation/deactivation of semi-fixed scheduling, is applied as a unit of subgroup.

The control unit 270 may assume that automatic retransmission request (HARQ) feedback in the downlink data channel, specifically, automatic retransmission request (HARQ) feedback for activation or deactivation of semi-fixed scheduling of the downlink data channel, is transmitted in a different time domain for each UE200.

Specifically, the control unit 270 may assume that the slot used for HARQ feedback for activation/deactivation of the SPS group-common PDSCH (see Fig. 2) is different for each UE200. The slot may be changed to a subslot or another unit in the time domain such as a subframe or symbol.

The control unit 270 may apply both an acknowledgment (ACK) and a negative acknowledgment (NACK) as feedback of an automatic retransmission request (HARQ) to the activation or deactivation of semi-fixed scheduling (SPS) of the downlink data channel (PDSCH).

Specifically, the control unit 270 may be both ACK/NACK and only HARQ feedback to activation/deactivation of SPS group-common PDSCH. On the other hand, the control unit 270 may be NACK-only for HARQ feedback to SPS group-common PDSCH without PDCCH.

Alternatively, the control unit 270 may be required to be both ACK/NACK for HARQ feedback to SPS group-common PDSCH and activation/deactivation of SPS group-common PDSCH.

Also, the control unit 270 may be required to be NACK-only for HARQ feedback to activation/deactivation of SPS group-common PDSCH.

The control unit 270 may be required to perform activation/deactivation of SPS group-common PDSCH at a higher layer than the physical (PHY) layer. For example, the control unit 270 may perform activation/deactivation at the MAC or RRC layer.

The control unit 270 may also perform confirmation for activation/deactivation of the SPS group-common PDSCH at a higher layer than the physical (PHY) layer. For example, control unit 270 may perform confirmation at the layer.

The control unit 270 may control activation or deactivation of semi-fixed scheduling (SPS) of the downlink data channel based on signaling common to a group of terminals or UE200-specific signaling.

Specifically, the control unit 270 may assume that activation/deactivation of the SPS group-common PDSCH is performed by both group common signaling and UE-specific signaling. Alternatively, the control unit 270 may assume that the activation/deactivation is performed by at least either group common signaling or UE-specific signaling.

The gNB100 may also perform the aforementioned downlink channel scheduling and control over HARQ.

### (3)Operation of radio communication system

Next, the operation of radio communication system 10 will be described. Specifically, the operation related to the downlink channel scheduling with respect to the MBS and the channel with respect to HARQ feedback.

In the MBS, group-common PDSCH scheduling with group-common PDCCH is possible (see Fig. 3), but SPS activation/deactivation for group-common PDSCH may be applied as described above (Such a group-common PDSCH may be referred to as an SPS group-common PDSCH for convenience).

In such a case, the method of confirmation for activation/deactivation needs to be considered.

Fig. 5 shows an example sequence of PDCCH, PDSCH and HARQ feedback that provided the scheme of SPS in MBS.

In 3GPP Release-15 (Unicast SPS), HARQ feedback can have confirmation meaning, but if such a scheme is applied to an MBS, and ACK/NACK is always fed back, then only if large amounts of PUCCH resources are available.

On the other hand, if NACK-only feedback is used, gNB is unable to recognize which UE is misdetection. Thus, how to transmit HARQ ACK/NACK can be an issue.

In the following, we describe an example of efficient operation of the SPS of the group-common PDSCH in light of these issues.

### (3.1) Operation Example 1

In this operation example, the terminal group (UE group) that is the destination of the SPS group-common PDSCH is divided into multiple subgroups. SPS activation/deactivation may be performed in divided subgroup units.

Fig. 6 shows an example of the configuration of the terminal group and subgroup in operation example 1. As shown in Fig. 6, the terminal group (UE Group of SPS group-common PDSCH) may be divided into multiple subgroups. The number of subgroups and the number of UEs included in each subgroup may not be particularly limited. As shown in Fig. 6, SPS activation/deactivation(release) may be performed in divided subgroup units. The UE200 may assume SPS activation/deactivation for each such subgroup.

The SPS group-common PDSCH in which
activation/deactivation(release) takes place may be the SPS group-common PDSCH for that group of terminals (That is, the terminal group before it was divided into subgroups.) or the group-common PDCCH/PDSCH for that G-RNTI.

A subgroup may be defined in association with a specific G (Group)-RNTI. A G-RNTI is an RNTI associated with a terminal group and may be called by another name. Also, an RNTI (for example, may be called sub-G-RNTI) generated based on a specific G-RNTI may be used, but the name need not be limited to this. G-RNTI may be an RNTI associated with Group-common PDCCH/PDSCH (the same shall apply hereinafter).

G-RNTI may be used for Group-common PDCCH CRC scrambling and/or PDSCH data scrambling of MBS. G-RNTI may be set by higher layer (For example, RRC) control information.

HARQ feedback for activation/deactivation of SPS per subgroup may use ACK/NACK feedback. In this case, a dedicated PUCCH resource for activation/deactivation per subgroup may be set up.

Subgroup SPS activation may not be accompanied by PDSCH reception. In this case, the slot for HARQ feedback may be determined based on subgroup activation reception timing.

According to this working example, activation/deactivation is performed in finer (smaller) subgroup units than the terminal group, so the amount of PUCCH resources used at one time can be reduced. This makes it more reliable and easy to detect activation/deactivation failures. On the other hand, group-common PDSCH transmissions can be performed in large groups of terminals, which reduces the number of PDSCH transmissions compared to those performed in subgroups.

### (3.2) Operation Example 2

In this example, the slot that performs HARQ feedback for activation/deactivation of the SPS group-common PDSCH may be different for each UE.

Specifically, a separate slot offset (That is, the offset in the time domain from PDSCH (or PDCCH) to PUCCH) may be notified for each UE in the PDCCH associated with activation/deactivation of the SPS group-common PDSCH.

More specifically, a field associated with HARQ feedback may be specified or set in the DCI format associated with activation/deactivation of the SPS group-common PDSCH.

The DCI containing the field may be CRC scrambled by G-RNTI or scrambled by RNTI generated based on G-RNTI. The field may also be a PDSCH-to-HARQ_feedback timing indicator field (defined in 3GPP TS 38.213) or a HARQ feedback timing indicator field.

The number of such fields may be set by control information in the higher layer. Also, a separate field may be specified or set for each UE, and the UE may determine the slot of the HARQ feedback based on the field associated with the UE. In this case, which of the multiple fields (For example, how many) is used to indicate the timing of the HARQ feedback of the UE may be set by the higher layer or determined according to a prescribed rule (For example, let C (cell)-RNTI be a field whose number is a remainder operation (mod operation) on the number of such fields.).

Of the multiple fields, the value of a field not associated with the UE may be ignored (not used to determine the timing of the HARQ feedback).

Fig. 7 shows an example of the instruction of the HARQ feedback in operation example 2. As shown in Fig. 7, the DCI field may contain multiple HARQ feedback timing indicators. Here is an example in which a specific UE is instructed to determine the HARQ feedback timing according to the field of the second HARQ feedback timing indicator (#2).

The behavior described above may be applied per multiple UEs instead of per UE. For example, if a subgroup of UEs is defined, a separate field may be defined or set for each subgroup, and the UE may determine the slot of the HARQ feedback based on the field associated with that UE. Again, as described above, which (For example, the number) field is used to indicate the timing of the HARQ feedback for that UE may be set by an higher layer or determined according to a prescribed rule. In addition, among the multiple fields, the value of a field not associated with the UE may be ignored (see Fig. 7).

Also, an offset in the time domain (which may be called a time offset) may be set for the HARQ feedback for activation/deactivation of the SPS group-common PDSCH. The time offset may be, but is not limited to, the offset of the slot from the PDSCH (or PDCCH) to the PUCCH, and may be in units of subslots, subframes, frames or symbols, as described above.

The offset of the slot included in the PDCCH pertaining to activation/deactivation of the SPS group-common PDSCH may not be used for the relevant HARQ feedback. That is, except for activation/deactivation of the SPS group-common PDSCH, it may or may not be used for HARQ feedback transmission for SPS group-common PDSCH reception.

In addition, multiple slot offset values may be set for each UE, and in the fields included in the PDCCH related to activation/deactivation of the SPS group-common PDSCH, the identifier (index) associated with the slot offset may be specified. In other words, even if the DCI format is 1_0, the slot offset may be set for each UE and associated with the index, and the index may be indicated by the DCI.

HARQ feedback timing may also be determined by adding or subtracting a time offset (Slot, subslot, subframe, frame or symbol number) set by a higher layer to or from the slot (may be a subslot, subframe, frame or symbol) number of the HARQ feedback timing indicated using a field pertaining to at least one HARQ feedback. If time offset is not set, the HARQ feedback timing may be determined as time offset=0.

This working example may be applied not only to activation/deactivation of SPS group-common PDSCH but also to HARQ feedback for any group-common PDCCH. For example, if only DCI format 1_0 is used for the MBS, at least one time offset for HARQ feedback may be set in the higher layer, for example, and one of the indices associated with the set time offset may be indicated by the DCI. In this case, flexibility in allocating resources for HARQ feedback to the group-common PDCCH is enhanced.

### (3.3) Operation Example 3

In this example of operation, HARQ feedback for activation/deactivation of SPS group-common PDSCH is always ACK/NACK feedback, and HARQ feedback for SPS group-common PDSCH without PDCCH (SPS group-common PDSCH without PDCCH, i.e. SPS group-common PDSCH that does not correspond to activation/deactivation) may be performed by NACK-only.

Fig. 8 shows a sequence example of PDCCH, PDSCH and HARQ feedback relating to operation example 3. As shown on the left side of Fig. 8, only HARQ feedback for activation/deactivation of SPS group-common PDSCH with PDCCH, both ACK and NACK may be transmitted. On the other hand, as shown on the right side of Fig. 8, only NACK may be transmitted for HARQ feedback for SPS group-common PDSCH without PDCCH (SPS group-common PDSCH without PDCCH).

In other words, even for SPS group-common PDSCH with NACK-only feedback set or indicated, HARQ feedback for activation/deactivation may be done by ACK/NACK feedback.

In this case, a PUCCH resource dedicated to ACK/NACK feedback for activation/deactivation may be set.

Also, if only a PUCCH resource/resource set for NACK-only feedback is set for HARQ feedback for group-common PDSCH, either of the following may be performed:
▪The UE may determine the PUCCH resource for ACK/NACK feedback based on the PUCCH resource/resource set for NACK-only feedback and perform ACK/NACK feedback for activation/deactivation.

For example, if PUCCH Format(PF) 0 (short format), the ACK resource may be derived by using the PUCCH resource for NACK based feedback in the case of NACK and setting CS index +6 for the PUCCH resource for NACK based feedback.

If PF1 (long format), the PUCCH resource for NACK based feedback may be transmitted by PF1 in either case of ACK/NACK. In PF1, ACK/NACK may be BPSK (Binary Phase Shift Keying)/QPSK (Quadrature Phase Shift Keying) modulated and transmitted.

▪ The UE may perform HARQ feedback on activation/deactivation of the SPS group-common PDSCH using the PUCCH resource/resource set for the Unicast PDSCH.

In this operating example, HARQ feedback for SPS group-common PDSCH and its activation/deactivation may always be performed by both ACK/NACK feedback. In other words, NACK-only feedback may not be performed.

Specifically, PUCCH resource/resource set for ACK/NACK feedback and PUCCH resource/resource set for NACK-only feedback may be set for HARQ feedback to group-common PDSCH. In this case, HARQ feedback for SPS group-common PDSCH and its activation/deactivation may be transmitted using PUCCH resource/resource set for ACK/NACK feedback.

Alternatively, if only PUCCH resource/resource set for NACK-only feedback is set for HARQ feedback for group-common PDSCH, either of the following may be done:
▪Based on PUCCH resource/resource set for NACK-only feedback, PUCCH resource for ACK/NACK feedback may be determined and ACK/NACK feedback may be done.

For example, if PF0, the ACK resource may be derived by using the PUCCH resource for NACK based feedback in the case of NACK and setting CS index +6 to the PUCCH resource for NACK based feedback. If PF1, either ACK/NACK may be transmitted by PF1 by using the PUCCH resource for NACK based feedback. In PF1, ACK/NACK may be BPSK/QPSK modulated and transmitted.

▪The UE may do HARQ feedback to the SPS group-common PDSCH using the PUCCH resource/resource set for the Unicast PDSCH.

### (3.4) Operation Example 4

In this example of operation, activation/deactivation of the SPS group-common PDSCH may be performed in a layer higher than the physical (PHY) layer.

For example, the activation/deactivation may be performed by a MAC CE(Control Element). Specifically, the relevant activation/deactivation may be notified by the MAC CE included in the group-common PDSCH. In this case, the relevant group-common PDSCH may mean the initial SPS group-common PDSCH reception.

The CRC(Cyclic Redundancy Checksum) of the PDCCH corresponding to the group-common PDSCH notifying activation/deactivation may be scrambled by the G-RNTI or by the RNTI for the SPS group-common PDSCH.

For HARQ feedback on activation/deactivation, either method described above may be applied.

Alternatively, the activation/deactivation of the SPS group-common PDSCH may be notified by the MAC CE included in the Unicast PDSCH. In this case, the offset from the Unicast PDSCH to the starting SPS group-common PDSCH receiving resource may be notified.

Alternatively, the activation/deactivation of the SPS group-common PDSCH may be notified by RRC signaling.

Specifically, the activation/deactivation of the SPS group-common PDSCH may be set by the Unicast signaling of the RRC layer and the activation/deactivation may be notified. Confirmation may be made by a completion report for the provision of RRC parameters.

Alternatively, activation/deactivation of the SPS group-common PDSCH may be notified by system information (SIB) containing information for multicasting.

### (3.5) Operation Example 5

In this example, confirmation for activation/deactivation of the SPS group-common PDSCH may be performed in a layer higher than the physical (PHY) layer.

For example, a confirmation MAC CE for the SPS group-common PDSCH may be defined and transmitted in response to an activation/deactivation reception of the SPS group-common PDSCH.

Alternatively, a UE that receives an activation/deactivation of the SPS group-common PDSCH may have to transmit the MAC CE at the earliest PUSCH resource since the reception. That is, if the MAC CE is not transmitted, the gNB may assume that the UE that did not (or could not) transmit has not received an activation/deactivation of the SPS group-common PDSCH. In this case, it may only apply if NACK-only feedback is set or indicated.

### (3.6) Operation Example 6

In this example of operation, activation/deactivation of the SPS group-common PDSCH may be performed by both group-common signaling and UE-specific signaling.

Situations (scenes) where such signaling is applied include, for example, when a UE that could not activate/deactivate by group-common signaling is able to receive activation/deactivation by UE-specific signaling, or when a new UE joins the UE group of the SPS group-common PDSCH where activation has already been completed and transmission has started to receive the SPS group-common PDSCH.

In this operating example, activation/deactivation of SPS group-common PDSCH may be performed by UE-specific PDCCH.

Specifically, if the CRC of a UE-specific PDCCH is scrambled by a prescribed RNTI, the PDCCH may be determined to be activation/deactivation of SPS group-common PDSCH.

Alternatively, if the DCI field value is identical to the activation/deactivation of UE-specific SPS PDSCH, the UE-specific PDCCH may be determined to be activation/deactivation of SPS group-common PDSCH.

Alternatively, if the given field of DCI is a given value, the UE-specific PDCCH may be determined to be activation/deactivation of SPS group-common PDSCH. The given fields are, for example, PDSCH-to-HARQ_feedback timing indicator, PUCCH resource indicator, ZP (Zero power) CSI-RS trigger, etc.

Alternatively, the PDSCH resource indicated in the UE-specific PDCCH may be recognized as an SPS group-common PDSCH.

### (3.7) Operation Example 7

In this example, HARQ feedback for activation/deactivation of SPS group-common PDSCH may be performed by ACK-only feedback.

Specifically, for ACK-only feedback, the UE may operate as follows:
▪A UE that successfully receives and decrypts a PDSCH sends an ACK
▪A UE that fails to receive and decrypt a PDSCH sends nothing Also, the PUCCH resource/resource set for ACK-only feedback may be set separately, or the PUCCH resource/resource set for ACK/NACK feedback or the PUCCH resource/resource set for NACK-only feedback may be used.

This operation example may be applied not only to activation/deactivation of SPS group-common PDSCH but also to group-common PDSCH other than SPS group-common PDSCH, specifically, to HARQ feedback of group-common PDSCH to which SPS does not apply.

### (3.8) Variations

The above example of operation 1-7 may be applied in combination as long as there is no inconsistency. In addition, as described above, the term indicating a time region such as a slot may be replaced by the term indicating another time region such as a subslot.

Also, the CRC of the PDCCH/DCI pertaining to activation/deactivation of the SPS group-common PDSCH may be scrambled by the G-RNTI.

Although the operation example described above was related to an MBS for simultaneous transmission (delivery) to multiple UEs, the UEs subject to the MBS need not always be multiple, and if an operation according to the MBS is performed, such as using the group-common PDSCH, the specific or unspecified multiple UEs may include a case in which there is substantially one, and not multiple UEs.

### (4)Operational effects

According to the above embodiment, the following working effects can be obtained. Specifically, according to UE200 (and gNB100) in operation example 1-7, the activation/deactivation of group-common PDSCH, or more precisely, SPS group-common PDSCH, can be performed normally, that is, gNB100 (the network) can detect the misdetection of DCI in UE200. In addition, gNB100 can appropriately control resources related to HARQ feedback (Includes activation/deactivation of SPS group-common PDSCH).
gNB100 and UE200 can efficiently and reliably perform the operations associated with semi-fixed scheduling (SPS) in a simultaneous data transmission service (MBS) to multiple specified or unspecified UE200s.

In this embodiment, with respect to the SPS group-common PDSCH, the UE200 can assume that the terminal group is divided into multiple sub-groups and the SPS of the downlink data channel (PDSCH) is applied as a unit of sub-groups. Therefore, the activation/deactivation failure of the SPS group-common PDSCH can be more reliably and easily detected. Also, by transmitting group-common PDSCH in large terminal groups, the number of PDSCH transmissions can be reduced compared to the case of transmitting in sub-groups.

In this embodiment, the UE200 may assume that the HARQ feedback for activation/deactivation of the SPS group-common PDSCH is transmitted in a different time domain (such as a slot) for each UE200. Thus, the SPS group-common PDSCH can be utilized while providing reliable HARQ feedback for each UE200.

In this embodiment, the UE200 may apply both positive (ACK) and negative (NACK) responses as HARQ feedback for activation/deactivation of the SPS group-common PDSCH. With this, dense HARQ feedback for each UE200 can be provided while utilizing the SPS group-common PDSCH.

In this embodiment, the UE200 may control the activation/deactivation of the SPS group-common PDSCH based on signaling common to a group of terminals or signaling specific to the UE200. Thus, the activation/deactivation of the SPS group-common PDSCH can be more reliably controlled.

### (5)Other Embodiments

Although the above description of the embodiment is not limited to the description of the said embodiment, it is obvious to those skilled in the art that various modifications and improvements are possible.

For example, in the above described embodiment, the names PDCCH and PDSCH were used as the downlink channels, but if it is a downlink control channel or downlink data channel (which may be a shared channel), it may be called by another name.

Also, in the above description, the words configure, activate, update, indicate, enable, specify, and select may be replaced with each other. Similarly, link, associate, correspond, map may be replaced with each other, and allocate, assign, monitor, and map may be replaced with each other.

In addition, specific, dedicated, UE-specific, and UE-specific may be replaced with each other. Similarly, common, shared, group-common, UE-common, and UE-shared may be read as interchangeable.

In addition, the block diagram (Fig. 4) used for the explanation of the above described embodiment shows blocks of functional units. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) for functioning transmission is called a transmission unit (transmitting unit) or a transmitter. In either case, as described above, the implementation method is not particularly limited.

Furthermore, the gNB100 and the UE200 described above may function as computers performing processing of the radio communication method of this disclosure. Fig. 9 is a diagram showing an example of the hardware configuration of the device. As shown in Fig. 9, the device may be configured as a computer device including a processor 1001, a memory 1002, a storage 1003, an communication device 1004, an input device 1005, an output device 1006, a bus 1007, etc.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see Fig. 4) is realized by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001, for example, operates an operating system to control the entire computer. The processor 1001 may consist of a central processing unit (CPU) including interfaces with peripheral devices, controllers, arithmetic units, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, etc. Memory 1002 may store programs (program code), software modules, etc., that are capable of executing a method according to one embodiment of this disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device such as a processor 1001 and a memory 1002 is connected by a bus 1007 for communicating information. The bus 1007 may be configured using a single bus or different buses for each device.

In addition, the device may include hardware such as a microprocessor, a digital signal processor (DSP), an application-specific integrated circuit (ASIC), a programmable logic device (PLD), or a field programmable gate array (FPGA), which may implement some or all of the functional blocks. For example, the processor 1001 may be implemented by using at least one of these hardware.

Also, the notification of information is not limited to the mode/embodiment described in this disclosure and may be made using other methods. For example, the notification of information may be carried out by physical layer signaling (e.g., Downlink Control Information (DCI), Uplink Control Information (UCI), higher layer signaling (e.g., RRC signaling, Medium Access Control (MAC) signaling, notification information (Master Information Block (MIB), System Information Block (SIB)), other signals or a combination thereof. The RRC signaling may also be referred to as an RRC message, e.g., an RRC Connection Setup message, an RRC Connection Reconfiguration message, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc., of each mode/embodiment described in this disclosure may be reordered as long as there is no conflict. For example, the method described in this disclosure uses an illustrative order to present elements of various steps and is not limited to the specific order presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from a higher layer (or lower layer) to a lower layer (or higher layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in this disclosure may be used alone, in combination, or switched over as practice progresses. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). Also, the signal may be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile body may be a vehicle (For example, cars, airplanes, etc.), an unmanned mobile body (For example, drones, self-driving cars, etc.) or a robot (manned or unmanned). At least one of a base station and a mobile station can be a device that does not necessarily move during the communication operation. For example, at least one of a base station and a mobile station may be an Internet of Things (IoT) device such as a sensor.

The base station in this disclosure may also be read as a mobile station (user terminal, hereinafter the same). For example, each mode/embodiment of this disclosure may be applied to a configuration in which communication between a base station and a mobile station is replaced with communication between multiple mobile stations (For example, it may be called Device-to-Device(D2D), Vehicle-to-Everything(V2X), etc.). In this case, the mobile station may have the function of the base station. In addition, words such as "up" and "down" may be replaced with words corresponding to communication between terminals (For example, "side"). For example, an up channel or a down channel may be replaced with a side channel (or a side link).

Similarly, a mobile station in this disclosure may be replaced with a base station. In this case, the base station may have the function of the mobile station. A radio frame may be composed of one or more frames in the time domain. Each frame or frames in the time domain may be referred to as a subframe. A subframe may be further configured by one or more slots in the time domain. A subframe may have a fixed length of time (For example, 1 ms) independent of numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. A PDSCH (or PUSCH) transmitted in units of time larger than a minislot may be referred to as a PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframes and TTI may be a subframe (1 ms) in an existing LTE, may have a duration shorter than 1 ms (For example, 1-13 symbols), or may have a duration longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. In addition, the number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be identified by an index of RBs relative to the common reference point of the carrier. PRB may be defined in BWP and numbered within that BWP.

BWP may include UL BWP (UL BWP) and DL BWP (DL BWP). One or a plurality of BWPs may be configured in one carrier for the UE.

At least one of the configured BWPs may be active, and the UE may not expect to send and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to an element using a designation such as "first," "second," and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include," "including," and variants thereof are intended to be inclusive in a manner similar to the term "comprising." Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" and "determination" may include regarding some action as "judgment" and "determination." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 radio communication system
20 NG-RAN
100 gNB
200 UE
210 radio signal transmission and reception unit
220 amplifier unit
230 modulation and demodulation unit
240 control signal and reference signal processing unit
250 encoding/decoding unit
260 data transmission and reception unit
270 control unit
1001 processor
1002 memory
1003 storage
1004 communication device
1005 input device
1006 output device
1007 bus

## Claims

1. A terminal comprising:
a reception unit that receives a downlink data channel common to a group of terminals in data distribution for multiple terminals; and
a control unit that assumes that a group of terminals is divided into multiple subgroups and activation or deactivation of semi-fixed scheduling of the downlink data channel is applied as a unit of the subgroup.

2. A terminal comprising:
a reception unit that receives a downlink data channel common to a group of terminals in data distribution for multiple terminals; and
a control unit that assumes that feedback of an automatic retransmission request in the downlink data channel is transmitted in a different time domain for each terminal.

3. A terminal comprising:
a reception unit that receives a downlink data channel common to a group of terminals in data distribution for multiple terminals; and
a control unit that applies both positive and negative responses as feedback of an automatic retransmission request for activation or deactivation of semi-fixed scheduling of the downlink data channel.

4. A terminal comprising:
a reception unit that receives a downlink data channel common to a group of terminals in data distribution for multiple terminals; and
a control unit that controls activation or deactivation of semi-fixed scheduling of the downlink data channel based on signaling common to the group of terminals or signaling specific to the terminals.

5. A radio communication method comprising the steps of:
receiving a downlink data channel common to a group of terminals in data distribution for multiple terminals; and
assuming that that a group of terminals is divided into multiple subgroups and activation or deactivation of semi-fixed scheduling of the downlink data channel is applied as a unit of the subgroup.

6. A radio communication method comprising the steps of:
receiving a downlink data channel common to a group of terminals in data distribution for multiple terminals; and
assuming that feedback of an automatic retransmission request in the downlink data channel is transmitted in a different time domain for each terminal.
